# EUROPEAN PATENT SPECIFICATION

(11) **EP 0 504 242 B1**
(45) Date of publication and mention of the grant of the patent: **28.06.1995**
(21) Application number: 91900870.6
(22) Date of filing: 10.12.1990
(51) Int. Cl.: C08F 283/10, C08G 59/16, G03F 7/028, G03F 7/033

(54) **CURABLE MATERIALS**
HÄRTENDE MATERIALIEN
MATERIAUX POLYMERISABLES

(30) Priority: 08.12.1989 GB 8927786
(43) Date of publication of application: 23.09.1992
(73) Proprietor: CRAY VALLEY SA, 92800 Puteaux (FR)
(72) Inventor: MILLS, Margaret, Newport Gwent NP1 9ST (GB); LUCAS, Robert, Thomas, Caerphilly Mid Glamorgan CF8 2FF (GB)
(74) Representative: Jolly, Jean-Pierre
(86) International application number: GB9001925
(87) International publication number: WO9109068

(56) References cited:
- EP-A- 0 003 040
- EP-A- 0 207 188
- EP-A- 0 273 729
- GB-A- 1 580 115
- US-A- 3 923 522
- US-A- 4 303 565
- Dialog Information Services, File 351, World Patent Index 81-91, Dialog accession no. 84-008713/02, ASAHI CHEMICAL IND KK) "Heat and chemical resistant photocurable resin adherent to metal is based on prepolymers of epoxy (meth)acrylate, ester (meth)acrylate with unsaturated ethylene Gps., urethane acrylate etc" JP 58204060, A, 831128, 8402 (Basic)
- Dialog Information Services, File 350, World Patent Index 63-80, Dialog accession no. 76-95024x/51, NIPPON SYNTH CHEM KK, "Photo hardening compsn. of excellent film forming ability - prepd. by reacting additives of unsatd. carboxylic acid and polyhydric alcohol allyl ether and polyhydric isocuanate", JP 51125476, A, 761101, 7651 (Basic)

## Description

This invention is concerned with improvements in and relating to photocurable materials, the preparation thereof and compositions containing them.

The use of materials containing ethylenic unsaturation, particularly that derived from an unsaturated carboxylic acid such as acrylic or methacrylic acid, in photocurable or photopolymerisable compositions is well known and established. Such compositions, when adapted to be cured by the action of UV light, generally also contain a photosensitizer in conjunction with the ethylenically unsaturated material. Such photocurable compositions are widely used as coating compositions; being firstly applied to a substrate by an appropriate method and then later being cured in situ on the substrate by the action of UV light.

It is a particular object of the present invention to provide a photocurable material which is suitable for use as a component in photocurable lithographic inks (i.e. inks to be applied to a substrate by a lithographic printing process and subsequently cured by exposure to UV radiation).

It has now been found, in accordance with the present invention, that certain reaction products of epoxy resins with fatty acids and unsaturated acids have unexpectably useful properties as components of photocurable lithographic inks. GB-A-1580115 discloses reaction products of a variety of epoxy resins with a combination of certain unsaturated fatty acids and unsaturated lower carboxylic acids, the fatty acid forming at least 25 mole % of the acid mixture. Such products are not disclosed for use in lithographic printing inks.

In accordance with a first embodiment of the present invention there is provided as an ethylenically unsaturated material, suitable for use in photocurable compositions, comprising the reaction product of an epoxy novolac resin with (i) an ethylenically unsaturated carboxylic acid and (ii) a long chain fatty acid, the long chain fatty acid forming from 2.5 to 15, preferably 6 to 12, mole % of the total components (i) and (ii).

Epoxy novolac resins (sometimes referred to as epoxidised novolac resins and which term is intended to embrace both epoxy phenol novolac resins and epoxy cresol novolac resins) are polyepoxy compounds, 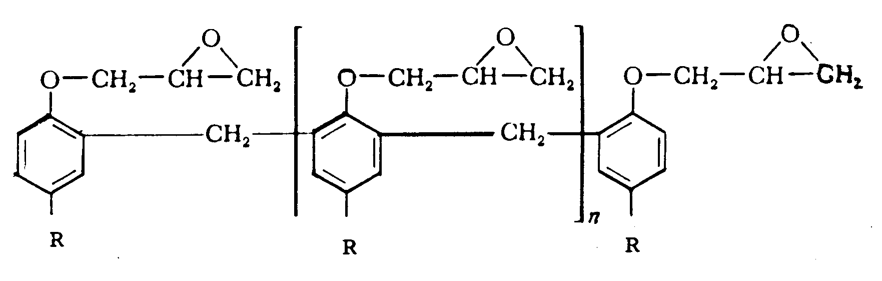
(in which R is a hydrogen atom or lower alkyl, e.g. methyl groups; and n is 0 or an integer).

Epoxy novolac (including epoxy cresol novolac resins) resins are readily commercially available, for example under the Registered Trade Marks DEN, Quatrex, Grilonit (ESN) and Araldite (ECN). The materials of commerce generally comprise mixtures of various species of the above formula and a convenient way of characterising such mixtures is by reference to the average, n', of the values of n for the various species. Preferred epoxy novolac resins for use in accordance with the invention are those in which n' has a value of from 0.2 to 6.0, more preferably from 1.1 to 4.0.

Preferred ethylenically unsaturated carboxylic acids for reaction with the epoxy novolac resin are acrylic acid and methacrylic acid, especially the former.

The fatty acid used to modify the epoxy novolac/unsaturated acid reaction product suitably contains at least 8 carbon atoms and is preferably one containing from 12 to 20 carbon atoms. Typical examples of suitable fatty acids are caprylic, capric, lauric, myristic, palmitic, stearic and arachidic acids. Mixtures of such acids, for example those such as may be derived, directly or indirectly, from vegetable or animal sources may be used.

The curable materials in accordance with the invention may be produced in one or two stages, namely by:
(a) reacting the epoxy novolac resin with a mixture of the ethylenically unsaturated carboxylic acid and the fatty acid; or
(b) reacting the epoxy novolac resin with the ethylenically unsaturated carboxylic acid to produce a reaction product (hereinafter, for convenience, simply referred to as an "epoxy acrylate"); and reacting the reaction product (epoxy acrylate) with the fatty acid.

Reaction of the epoxy novolac with the acid(s) is carried out by reacting the resin with the acid(s), generally at elevated temperature, e.g. 70 to 110°C, and possibly in the presence of a catalyst such as triphenyl phosphine.

In the course of reaction of the ethylenically unsaturated acid with the novolac resin, the epoxy groups of the resin and the carboxylic acid groups of the acids react to link the acids to the resin by an ester linkage whilst at the same time giving rise to free secondary hydroxyl groups.

The ratio of total carboxyl groups to epoxy oxygen atoms should preferably be substantially 1:1. The final product suitably has an epoxy value below 10mgKOH/g, preferably below 5 mgKOH/g, and an acid value below 4 mgKOH/g, preferably below 2 mgKOH/g.

The curable materials (esters) in accordance with the invention are readily photopolymerisable or photocurable by the action of ultra violet light in the presence of a conventional photoinitiator.

Accordingly, the invention also provides a photocurable composition comprising a photocurable material as defined above together with a photoinitiator. Such compositions may also, and indeed generally will, contain other ingredients such as, for example, diluents, colourants or fillers.

Suitable photosensitizers or photoinitiators for use in photocurable compositions according to the invention include benzophenone, substituted benzophenones, 2-chlorohioxanthone, isopropylthioxanthene, di-alkyl-p dimethylamine benzoates (including the diethyl, amyl/isoamyl and ethyl hexyl compounds), and 2-cleavage initiators, such as these sold under the Registered trade Marks Darocur 1173, Irgacure 174, Irgacure 184, Irgacure 651, Irgacure 907, Irgacure 369, Esacure KIP, and Lucirin 7PO. Commonly an initiator system will comprise a mixture of two or more compounds as listed above.

The diluents possibly employed in the photocurable compositions may be reactive or non-reactive diluents. Thus, reactive diluents are diluents which themselves contain ethylenically unsaturation and will co-polymerise with the curable esters in the composition, during irradiation thereof, to afford a cured composition. Examples of such reactive diluents include esters of acrylic acid and methacrylic acids such as tripropylene glycol diacrylate, trimethylolpropane triacrylate, alkoxylated trimethylolpropane triacrylate, pentaerythritol triacrylate, alkoxylated pentaerythritol triacrylate, di-tetramethylolpropane triacrylate, alkoxylated neopentyl glycol diacrylate, alkoxylated glyceryl triacrylates, dipentaerythritol penta- and hexa-acrylates and dianol diacrylate.

The colourants used in the photocurable compositions may be pigments or dyestuffs. Suitable fillers include mineral fillers such as silicas, bentonite clays, talc, alumina hydrate, barium sulphate, calcium carbonate and magnesium carbonate.

In accordance with a particularly preferred embodiment of the invention, the photocurable composition takes the form of a lithographic ink; generally comprising (I) a photocurable ester of the invention, (II) reactive diluent as discussed above, (III) a photoinitiator, and (IV) a colorant. The ink suitably comprises from 10 to 80% by weight, preferably 30 to 50% by weight of curable ester (I), from 0 to 30 % by weight, preferably 5 to 15 % by weight, of reactive diluent (II); from 2 to 10 % by weight, preferably 5 to 8%, by weight of photoinitiator (III), and from 5 to 30% by weight, preferably 10 to 20% by weight, of colorant (IV) in the form of a pigment.

The lithographic inks of the invention may also contain mineral fillers as discussed above and, also, micronised (e.g. having a particle size of 1-20 »m (120 microns)) polyethylene, polypropylene and/or polytetrafluorethylene.

The lithographic inks of the invention can show improved lithographic control on a printing press whilst still maintaining the cure speed required for commercial operation, typically 50 meters per minute under an irradiation of 80 watts per cm.

In order that the invention may be well understood the following examples are given by way of illustration only. In the Example all parts are by weight unless otherwise indicated.

### Example 1

A solution of an ethylenically unsaturated material in accordance with the invention in a polymerizable solvent (tripropylene glycol diacrylate) was prepared from the following ingredients.

| | |
|---|---|
| Quatrex 2410 (Dow Chemical) | 39.116 |
| Tripropylene glycol diacrylate | 43.868 |
| Inhibitor (Hydroquinone) | 0.167 |
| Catalyst (Triphenyl phosphine) | 0.516 |
| Stannous octoate | 0.449 |
| Lauric acid | 2.035 |
| Glacial acrylic acid | 13.849 |

The epoxy novolac resin (Quatrex 2410), multifunctional acrylate, inhibitor and stannous octoate were charged to a round-bottom glass reaction vessel, fitted with a stirrer, thermometer and air-sparge (set at 36/kg/hr).

The temperature was raised, gently, to dissolve the epoxy resin in the multifunctional acrylate (ca. 80°C). The acrylic and fatty acid were then charged with the catalyst over a temperature range of 80-110°C.

This temperature was maintained until the acid value had fallen below 2 mg KOH/g and the epoxide value had fallen to below 5 mg KOH/g.

The batch was then cooled to 70°C, and discharged through a filter.

### Example 2

An ester was prepared, following the procedure of Example 1, from the following ingredients.

| | |
|---|---|
| Quatrex 2010 (Dow Chemical) | 44.95 |
| Tripropylene glycol diacrylate | 33.814 |
| Inhibitor (Hydroquinone) | 0.198 |
| Catalyst (Triphenyl phosphine) | 0.609 |
| Stannous octoate | 0.530 |
| Coconut oil fatty acid | 3.870 |
| Glacial acrylic acid | 16.034 |

### Example 3

Following the procedure of Example 1 a modified epoxy novolac acrylate was made from the following components:-

| | |
|---|---|
| Epoxy novolac (DEN 438) | 42.705 parts |
| Inhibitor (hydroquinone) | 0.183 parts |
| Catalyst (triphenylphosphine) | 0.563 parts |
| Stannous octoate | 0.490 parts |
| Acrylic acid (glacial) | 15.652 parts |
| Octanoic acid | 1.443 parts |
| Multifunctional acrylate (tripropylene glycol diacrylate) | 38.764 parts |

### Examples 4 and 5

Modified epoxy novolac resins were prepared, following the procedure of Example 1 from the following ingredients.

### Example 4

| | |
|---|---|
| Epoxy novolac resin (Quatrex 2410) | 35.015 parts |
| Inhibitor (hydroquinone) | 0.153 parts |
| Catalyst (triphenyl phosphine) | 0.468 parts |
| Stannous octoate | 0.408 parts |
| Acrylic acid | 12.071 parts |
| Coconut oil fatty acid | 2.914 parts |
| Multifunctional acrylate (ethoxylated trimethylol propane triacrylate) | 48.971 parts |

### Example 5

| | |
|---|---|
| Epoxy novolac resin (Quatrex 2010) | 40.300 parts |
| Inhibitor (hydroquinone) | 0.184 parts |
| Catalyst (triphenyl phosphine) | 0.561 parts |
| Stannous octoate | 0.490 parts |
| Acrylic acid | 13.208 parts |
| Lauric acid | 6.497 parts |
| Multifunctional (acrylate) (Propoxylated glycenol triacrylate) | 38.765 parts |

Lithographic printing inks were prepared from the modified resins produced in Examples 3, 4 and 5, in accordance with the following formulations.

### Example 6

| | |
|---|---|
| Modified resin of Example 3 | 55.0 parts |
| Ethoxylated trimethylol propane triacrylate | 15.0 parts |
| Pigment Blue (15:3) | 20.0 parts |
| Benzophenone | 3.0 parts |
| Ethyl p-dimethylamino-benzoate | 2.0 parts |
| Irgacure 651 | 2.0 parts |
| Bentone 500 | 2.0 parts |
| Polyfluo 190 | 1.0 parts |

### Example 7

| | |
|---|---|
| Modified resin of Example 4 | 58.0 parts |
| Alkoxylated pentaerythritol triacrylate | 16.0 parts |
| Pigment Yellow 13 | 14.0 parts |
| Benzophenone | 3.0 parts |
| 2-Chlorothioxanthone | 1.0 parts |
| Isuamyl dimethylaminobenzoate | 3.0 parts |
| Calcium carbonate | 3.0 parts |
| Shamrock wax 55TU | 2.0 parts |

### Example 8

| | |
|---|---|
| Modified acrylate of Example 5 | 55.0 parts |
| Propoxylated glycenol triacrylate | 14.0 parts |
| Pigment Red 112 | 18.0 parts |
| Benzophenone | 3.0 parts |
| Isopropyl-thioxanthone | 1.0 parts |
| Ethyhexyl dimethylaminobenzoate | 2.0 parts |
| Daracur 1173 | 2.0 parts |
| Aerosil 200 | 1.5 parts |
| Lenowax PE 1500 | 1.5 parts |

## Claims

1. An ethylenically unsaturated material comprising the reaction product of an epoxy novolac resin with (i) an ethylenically unsaturated carboxylic acid and (ii) a long chain fatty acid, the long chain fatty acid forming from 2.5 to 15 mole % of the total of components (i) and (ii).

2. An unsaturated material as claimed in claim 1 in which the ethylenically unsaturated carboxylic acid is acrylic acid or methacrylic acid.

3. An unsaturated material as claimed in claim 1 or claim 2 in which the long chain fatty acid is one containing from 12 to 20 carbon atoms.

4. An unsaturated material as claimed in any one of the preceding claims having an epoxy value of less than 10mgKOH/g and an acid value of less than 4 mgKOH/g.

5. A photocurable composition comprising an ethylenically unsaturated material as claimed in any one of the preceding claims together with a photoinitiator.

6. A composition as claimed in claim 5 also containing one or more ethylenically unsaturated diluents.

7. A composition as claimed in claim 6 in the form of a lithographic printing ink.

## Patentansprüche

1. Ethylenisch ungesättigtes Material, bestehend aus dem Umsetzungsprodukt aus einem Epoxid-Novolak-Harz und (i) einer ethylenisch ungesättigten Carbonsäure und (ii) einer langkettigen Fettsäure, wobei die langkettige Fettsäure 2,5 bis 15 Mol-% der Gesamtmenge der Komponenten (i) und (ii) ausmacht.

2. Ungesättigtes Material nach Anspruch 1, worin die ethylenisch ungesättigte Carbonsäure Acrylsäure oder Methacrylsäure ist.

3. Ungesättigtes Material nach Anspruch 1 oder Anspruch 2, worin die langkettige Fettsäure eine mit 12 bis 20 Kohlenstoffatomen ist.

4. Ungesättigtes Material nach einem der vorhergehenden Ansprüche mit einem Epdoxidwert von weniger als 10 mg KOH/g und einem Säurewert von weniger als 4 mg KOH/g.

5. Photohärtbare Zusammensetzung, bestehend aus einem ethylenisch ungesättigten Material nach einem der vorhergehenden Ansprüche und einem Photoinitiator.

6. Zusammensetzung nach Anspruch 5, die ebenfalls ein oder mehrere Verdünnungsmittel enthält.

7. Zusammensetzung nach Anspruch 6 in Form einer lithographischen Druckfarbe.

## Revendications

1. Un matériau éthyléniquement insature comprenant le produit de réaction d'une résine époxy novolaque avec (i) un acide carboxylique éthyléniquement insaturé et (ii) un acide gras à chaîne longue, l'acide gras à chaîne longue formant de 2,5 à 15 % en moles de la somme des composants (i) et (ii).

2. Un matériau insaturé selon la revendication 1, dans lequel l'acide carboxylique éthyléniquement insaturé est l'acide acrylique ou l'acide méthacrylique.

3. Un matériau insaturé selon la revendication 1 ou la revendication 2, dans lequel l'acide gras à chaîne longue contient de 12 à 20 atomes de carbone.

4. Un matériau insaturé selon l'une quelconque des revendications précédentes, ayant une valeur époxy inférieure à 10 mg KOH/g et une valeur d'acide inférieure à 4 mg KOH/g.

5. Une composition photoréticulable comprenant un matériau éthyléniquement insaturé selon l'une quelconque des revendications précédentes, en mélange avec un photoinitiateur.

6. Une composition selon la revendication 5, comprenant en outre un ou plusieurs diluants éthyléniquement insaturés.

7. Une composition selon la revendication 6, sous la forme d'une encre d'impression lithographique.
